(19) **Europäisches Patentamt / European Patent Office / Office européen des brevets**

(11) **EP 4 560 719 A1**

(12) **EUROPEAN PATENT APPLICATION**
published in accordance with Art. 153(4) EPC

(43) Date of publication:
**28.05.2025 Bulletin 2025/22**

(21) Application number: 22969788.3

(22) Date of filing: **30.12.2022**

(51) International Patent Classification (IPC):
**H01M 4/13** (2010.01)      **H01M 10/0583** (2010.01)

(52) Cooperative Patent Classification (CPC):
**H01M 10/0431; H01M 4/13; H01M 10/0525;**
**H01M 10/0583;** H01M 2004/021; H01M 2004/027;
Y02E 60/10

(86) International application number:
**PCT/CN2022/143980**

(87) International publication number:
**WO 2024/138645 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**Co., Limited**
**Ningde, Fujian 352100 (CN)**

(72) Inventors:
• **LIN, Jiang**
  **Ningde, Fujian 352100 (CN)**
• **WU, Bingzhao**
  **Ningde, Fujian 352100 (CN)**

• **LIAO, Ruhu**
  **Ningde, Fujian 352100 (CN)**
• **DAI, Ya**
  **Ningde, Fujian 352100 (CN)**
• **WEI, Jingjing**
  **Ningde, Fujian 352100 (CN)**
• **YANG, Rui**
  **Ningde, Fujian 352100 (CN)**
• **ZHANG, Shengwu**
  **Ningde, Fujian 352100 (CN)**
• **WU, Zhiyang**
  **Ningde, Fujian 352100 (CN)**

(74) Representative: **Gong, Jinping**
**CocreateIP**
**Neumarkterstr. 21**
**81673 München (DE)**

(54) **ELECTRODE ASSEMBLY AND MANUFACTURING METHOD THEREFOR, BATTERY CELL, BATTERY, AND ELECTRIC DEVICE**

(57) An electrode assembly (10), a battery cell (100), a battery (200), and an electrical apparatus are disclosed. The electrode assembly (10) includes a first electrode plate (1), the electrode plate (1) includes a current collector (11) and active material layers (12) arranged on the current collector (11), the active material layer (12) is provided with a plurality of material removal regions (13) at intervals in an extension direction (L) of the first electrode plate (1), and the material removal region (13) extends in a width direction (Y) of the first electrode plate (1); the active material layer (12) is provided with a marking portion (14), a width of the marking portion (14) in the extension direction (L) of the first electrode plate (1) is greater than or equal to a width of the material removal region (13), and the marking portion (14) spans across the material removal region (13).

**FIG. 6**

## Description

## TECHNICAL FIELD

The present application relates to the technical field of batteries, and in particular, to an electrode assembly and a manufacturing method thereof, a battery cell, a battery, and an electrical apparatus.

## BACKGROUND

Due to the advantages of high energy density, high power density, large number of cycles, long storage time, and the like, lithium-ion batteries and other batteries are widely used in electrical apparatuses such as an electric automobile.

However, at present, it is still difficult for an electrode assembly of a battery cell to achieve optimal performance. Therefore, how to improve the performance of the electrode assembly has always been a problem in the industry.

## SUMMARY

The present application aims to provide the performance of an electrode assembly.

According to a first aspect of the present application, an electrode assembly is provided, including a first electrode plate, wherein the first electrode plate includes:

a current collector;

active material layers, arranged at the current collector, wherein the active material layer is provided with a plurality of material removal regions at intervals in an extension direction of the first electrode plate, and the material removal region extends in a width direction of the first electrode plate;

wherein a marking portion is arranged on the active material layer, a width of the marking portion in the extension direction is greater than or equal to a width of the material removal region, and the marking portion spans across the material removal region.

In this embodiment, for the electrode assembly using continuous electrode plates as the first electrode plate, by the arrangement of the material removal regions, it is convenient for bending. In order to improve the precision of a folding position, the material removal regions are set to be thinner, or the optical performance of the material removal regions is indistinguishable from that of an edge of an active material region, or second electrode plates are not on the same side as the material removal regions. For these situations where it is difficult to identify edges of the material removal regions, overhang (OH) values can be detected with the help of the marking portions. Since the width of the marking portion is not less than the width of the material removal region and the marking portion spans across the material removal region, in a case that the detected OH values obtained through the marking portions meet a requirement, actual OH values also meet the requirement. This can lower the difficulty of detecting the OH values in the electrode assembly and help improve the precision of OH value detection.

In some embodiments, the first electrode plate is a negative electrode plate.

In this embodiment, the first electrode plate is set to be the negative electrode plate. In order to meet an overhang requirement, an edge of each material removal region of the negative electrode plate needs to be beyond an edge of a second electrode plate with a positive polarity, and an edge of each marking portion in the extension direction will not be covered by the second electrode plate, so that the OH value can be detected intuitively and conveniently, which can improve the detection efficiency and improve the precision of OH value detection, thereby improving the performance of the electrode assembly.

In some embodiments, the active material layers are respectively arranged on two sides of the current collector; and the active material layers on the two sides are provided with the marking portions at a position where each material removal region is located.

In this embodiment, considering that second electrode plates with opposite polarities to that of the first electrode plate are arranged on the two sides of the first electrode plate, since the marking portions are arranged on the two sides of the first electrode plate, it is possible to easily detect the OH values corresponding to the second electrode plates on the two sides. This can improve the detection efficiency and improve the precision of OH value detection, thereby improving the performance of the electrode assembly.

In some embodiments, in the extension direction, the material removal region has two first side edges spaced apart; in the extension direction, the marking portion has two second side edges spaced apart; and at least a portion of the second side edges is parallel to the first side edges.

In this embodiment, at least a portion of length sections of the second side edges of the marking portions is parallel to the first side edges. During the detection of the OH values, distances between the parallel sections on the second side edges and the second electrode plates can be measured as detected OH values, so that it is easier to select detection points on the marking portions. Furthermore, the length sections of the second side edges parallel to the first side edges are translated outwards in the extension direction relative to the first side edges. In a case that the OH values detected through the second side edges meet a requirement, the actual OH values can also meet the requirement, ensuring the reliability of OH detection.

In some embodiments, the electrode assembly further includes second electrode plates, wherein a maximum distance between one of the second side edges of the marking portion and the first side edge on the same side is L1, and a maximum distance between the other second side edge and the first side edge on the same side is L2; L1 and L2 are both less than a target OH value; and the target OH value is a minimum distance between the second side edge and an edge of the second electrode plate adjacent to the second side edge.

This embodiment makes a sum less than the target OH value, which limits the maximum distance of the second side edge beyond the first side edge. Since the target OH value itself is small, in a case that the detected OH value is not less than the target OH value, an extremely large actual OH value can be prevented. This helps to precisely control the actual OH value and can shorten the distance of a negative active material beyond a positive active material, thereby reducing the size of the electrode assembly and the waste of materials.

In some embodiments, 0.2* target OH value ≤L1≤0.95* target OH value, and 0.2* target OH value ≤L2≤0.95* target OH value.

In this embodiment, for different electrode assemblies, connections between L1, as well as L2, and the target OH value are constructed. By arranging a proportion range of a sum relative to the target OH value, a lower limit value can prevent such a phenomenon that it is hard to identify the second side edges and the first side edges if the second side edges are close to the first side edges, thereby improving the convenience and precision of OH detection, and an upper limit value can prevent an extremely large actual OH value. This helps to precisely control the actual OH value and can shorten the distance of a negative active material beyond a positive active material, thereby reducing the size of the electrode assembly and the waste of materials.

In some embodiments, L1≤1 mm, L2≤1 mm.

This embodiment provides the specific value ranges of L1 and L2, so that an extremely large actual OH value can be prevented. This helps to precisely control the actual OH value and can shorten the distance of a negative active material beyond a positive active material, thereby reducing the size of the electrode assembly and the waste of materials.

In some embodiments, a maximum distance between one of the second side edges of the marking portion and the first side edge on the same side is L1, and a maximum distance between the other second side edge and the first side edge on the same side is L2; and a degree of deviation of the marking portion from a center of the material removal region in the extension direction does not exceed 30%.

In this embodiment, the degree of deviation of the marking portion from the material removal region in the extension direction is limited, so that the marking portion is as centered as possible relative to the material removal region, that is, the marking portion is located as much as possible in a center position between adjacent active material regions. This can prevent the detection OH value of one side from being less than the target OH value, and even less than, because of an extremely large deviation in the OH detection of the two sides of the marking portion. In this case, the actual OH value of this side may also meet the requirement, thereby avoiding scrapping of a normal electrode assembly.

In some embodiments, |L1-L2|≤0.2 mm.

This embodiment provides the specific value deviation range of L1 and L2, so that the marking portion can be as centered as possible relative to the material removal region. This can prevent the detection OH value of one side from being less than the target OH value, and even less than, because of an extremely large deviation in the OH detection of the two sides of the marking portion. In this case, the actual OH value of this side may also meet the requirement, thereby avoiding scrapping of a normal electrode assembly.

In some embodiments, the active material layer is provided with two marking portions in the same material removal region, and the two marking portions are respectively arranged in regions of the active material layer close to two sides in the width direction.

In this embodiment, the marking portions are respectively arranged in the regions of the active material layer close to the two sides in the width direction. In a case that an electrode plate is deflected, a minimum OH value can be obtained in the width direction. When the minimum OH value meets a requirement, it can reliably ensure that the detected OH values in the width direction all meet the requirement, and the influence of the deflection of the electrode plate on the performance of the electrode assembly can be reduced.

In some embodiments, the marking portions are located in a region that is 1/4 of the active material layer from the width edge.

In this embodiment, no matter which direction the second electrode plate is deflected to relative to the first electrode plate, the actual OH value detected by one marking portion is small. If the small actual OH value can meet the requirement, all the detected OH values in the width direction meet the requirement, which can reduce the influence of the deflection of the electrode plate on the performance of the electrode assembly.

In some embodiments, the marking portions have overlapping portions with the material removal region in the width direction, or the marking portions are located on an extension line of the material removal region in the width direction.

In this embodiment, the marking portions have the overlapping portions with the material removal region in the width direction, which can improve the position precision of the marking portions relative to the material removal region in the extension direction, so that it is convenient for positioning during the arrangement of the marking portions. By the arrangement of the marking portions on the extension line of the material removal region in the width direction, the arrangement positions of the marking portions can be selected more flexibly. Moreover, if the marking portions are through grooves, an excessive decrease in the intensity of the first electrode plate due to the overlapping between the marking portions and the material removal region can be prevented, and breakage during bending formation or use can be avoided.

In some implementations, the marking portion includes a first through groove.

In this embodiment, the marking portion is set as the first through groove, which can assist the material removal region in decreasing the intensity of the first electrode plate and assist in folding, and the first through groove is easy to process. If the material removal region is formed by laser processing, the material removal region and the first through groove can be processed using the same laser device, without adding an additional device. Moreover, due to the first through grooves, the need of arranging the marking portions respectively for the active material layers on the two sides is avoided, so that detection references of the OH values on the two sides of the first electrode plate can be unified, and the precision of OH value detection can be improved. In addition, when an OH value is calculated using an image obtained by a capturing component, the first through groove can be light-transmissive, which is conductive to capturing the second side edges of the marking portions, thereby improving the precision of OH detection.

In some embodiments, in the width direction, a total width of all the first through grooves on the active material layers is A, a width of the material removal region is B, and 2%≤A/B≤50%.

In this embodiment, by limiting a lower limit value of A/B, such a phenomenon that it is not easy to capture the second side edges because the second side edges are extremely short due to an extremely small width of the marking portion can be prevented, so that the convenience and precision of OH value detection can be improved. By limiting an upper limit value of A/B, such a phenomenon that the intensity of the first electrode plate is affected by an extremely large width of the marking portion can be prevented, and breakage during bending formation or use can be avoided.

In some embodiments, the marking portion includes a marking layer, and the marking layer and the active material layer have different colors.

In this embodiment, the marking portion is set to be the marking layer, which can prevent the influence of the marking portion on the intensity of the first electrode plate and avoid breakage during bending formation or use. Moreover, since the marking layer is distinguished from the active material layer in color, it is easy to capture the edge of the marking layer through an optical characteristic, which can improve the convenience and precision of OH value detection.

In some embodiments, the material removal region includes at least one of a continuous score, a discontinuous score, and a second through groove.

In this embodiment, different material removal regions or combinations can be flexibly selected according to an actual need. The scores are convenient to process and have a better effect of guiding the bending of the first electrode plate. Moreover, this method for processing the material removal regions can achieve a small width. This can improve the precision of a bending position and reduce the amount of misalignment after stacking of two adjacent layers of electrode plates in the electrode assembly, so that a battery has good electrochemical performance. Since the first electrode plate is thin, it is not necessary to accurately control a depth of a groove due to the arrangement of the second through groove, which can lower the requirement on the processing precision. Moreover, the second through groove can greatly reduce the intensity of the first electrode plate, so that the first electrode plate is easy to bend.

In some embodiments, the electrode assembly further include second electrode plates, wherein the first electrode plate is bent to form at least one bent portion; each bent portion includes at least one bent section and at least two straight sections, and two adjacent straight sections are connected through the bent section.

For each bent portion, the second electrode plate is arranged between two adjacent straight sections; and the second electrode plate and the first electrode plate adjacent to the second electrode plate have opposite polarities.

In this embodiment, the material removal region is arranged in each bent section, so that the first electrode plate can be guided to be folded along the material removal region, and the first electrode plate is bent more easily. This can accurately fold the first electrode plate at a predetermined position, thereby reducing the amount of misalignment of a plurality of layers of electrode plates, improving the flatness of the first electrode plate after folding, and improving the performance of the electrode assembly. Moreover, the marking portions will not affect the bending of the first electrode plate on the basis of facilitating the OH value detection, and the OH value detection can be performed before the first electrode plate is bent.

In some embodiments, in an opening direction of each bent portion, each second electrode plate is located between two adjacent marking portions; and the marking portions are spaced apart from an edge of the second electrode plate.

In this embodiment, after the electrode assembly is formed, the marking portions and the edge of the second electrode plate are still spaced apart, so that an edge of a negative active material region is beyond an edge of a positive active material region, and the first electrode plate and the second electrode plate meet an overhang requirement.

According to a second aspect of the present application, a battery cell is provided, including the electrode assembly of the above embodiments.

According to a third aspect of the present application, a battery is provided, including the battery cell of the above embodiment.

According to a fourth aspect, an electrical apparatus is provided, including the battery cell and/or the battery of the above embodiment, configured to supply electric energy for the electrical apparatus.

According to a fourth aspect of the present application, a manufacturing method of an electrode assembly is provided, including:

in a case that a first electrode plate is in an unfolded state, arranging a plurality of material removal regions at intervals on active material layers of the first electrode plate in an extension direction of the first electrode plate, wherein the material removal regions extend in a width direction of the first electrode plate, and the active material layers are arranged on a current collector of the first electrode plate; and
in a case that the first electrode plate is in an unfolded state, arranging marking portions on the active material layers, wherein a width of the marking portion in the extension direction is greater than or equal to a width of the material removal region, and the marking portion spans across the material removal region.

In this embodiment, for the electrode assembly using continuous electrode plates as the first electrode plate, by the arrangement of the material removal regions, it is convenient for bending. In order to improve the precision of a folding position, the material removal regions are set to be thinner, or the optical performance of the material removal regions is indistinguishable from that of an edge of an active material region, or second electrode plates are not on the same side as the material removal regions. For these situations where it is difficult to identify edges of the material removal regions, OH values can be detected with the help of the marking portions. Since the width of the marking portion is not less than the width of the material removal region and the marking portion spans across the material removal region, in a case that the detected OH values obtained through the marking portions meet a requirement, actual OH values also meet the requirement. This can lower the difficulty of detecting the OH values in the electrode assembly and help improve the precision of OH value detection. Therefore, the precision of a folding position of the first electrode plate and the precision of OH value detection can be ensured at the same time.

In some embodiments, the first electrode plate forms a position to be bent in each material removal region; and after the material removal region and the marking portion at the same position to be bent are formed, the first electrode plate moves to the next position to be bent.

In this embodiment, the material removal region and the marking portions can be formed during a single movement of the first electrode plate, which can simplify the technological process and prevent the long and thin first electrode plate from deforming due to repeated movements; and the material removal region and the marking portions at the same position to be bent can be in accordance with the same processing reference, so that high precision of a relative position can be achieved.

In some embodiments, the material removal region and the marking portion are formed sequentially, alternately, or simultaneously at the same position to be bent.

In this embodiment, a processing sequence can be flexibly selected for the material removal region and the marking portions at the same position to be bent according to an actual situation, which can improve the production efficiency of the first electrode plate.

In some embodiments, the marking portion includes a first through groove, and the material removal region and the marking portion are processed through the same processing device.

In this embodiment, the material removal regions and the marking portions are processed by the same processing device, and the marking portions can be formed on the first electrode plate without adding an additional device. There is no need to adjust the existing manufacturing device, which can save the costs.

In some embodiments, the marking portion includes a marking layer; the marking layer and the active material layer have different colors; the material removal region is processed by a processing device; and the marking layer is formed on a surface of the active material layer by pasting or coating.

In this embodiment, the marking portion and the material removal region are separately formed, without interference. Furthermore, the marking portion is set to be the marking layer, which can prevent the influence of the marking portion on the intensity of the first electrode plate and avoid breakage during bending formation or use. Moreover, since the marking layer is distinguished from the active material layer in color, it is easy to capture the edge of the marking layer through an optical characteristic, which can improve the convenience and precision of OH value detection.

In some embodiments, the manufacturing method further includes:

during the formation of the marking portion, using the corresponding material removal region as a positioning reference; or

during the formation of the marking portion, selecting the same positioning reference as that of the corresponding material removal region.

In this embodiment, during the formation of the marking portion, the material removal region at the same bent position can be used as the positioning reference. For example, positioning is carried out by a center position of the materi al removal region, or by any first side edge of the material removal region, so that the precision of a relative position between the marking portion and the material removal region can be improved, and accumulation of errors can be prevented. In this method, the material removal region needs to be processed first, or the same positioning reference as that of the corresponding material removal region can be selected. There is no limitation on the processing sequence of the marking portion and the material removal region. For example, the marking portion and the material removal region can be both processed by using an initial end portion of the first electrode plate as a positioning reference.

In some embodiments, the manufacturing method further includes:

> compounding the first electrode plate with two spacers to form a first composite electrode plate; compounding a plurality of second electrode plates with the two spacers in the first composite electrode plate respectively to form a second composite electrode plate, wherein the second electrode plate and the first electrode plate have opposite polarities; and bending the second composite electrode plate at the material removal regions to form at least one bent portion on the first electrode plate, wherein each bent portion includes at least one bent section and at least two straight sections, and two adjacent straight sections are connected through the bent section; and the second electrode plate is arranged between two adjacent straight sections.

In this embodiment, considering that the OH value detection needs to be performed in the unfolded state of the composite electrode plate, the plurality of second electrode plates are first attached to the first composite electrode plate, and then the second composite electrode plate is bent. The forming method of this stacked type electrode assembly is conductive to performing the OH value detection.

In some embodiments, before bending the second composite electrode plate at the material removal regions, the method further includes: detecting a minimum distance, as a detected OH value, between an edge of each marking portion in the extension direction and an edge of the second electrode plate adjacent to the marking portion, and determining, in a case that the detected OH values of all the second electrode plates are not less than a target OH value, that OH values of the electrode assembly are qualified.

In this embodiment, for a case where it is difficult to identify edges of the material removal regions, OH values can be detected with the help of the marking portions. Since the width of the marking portion is not less than the width of the material removal region and the marking portion spans across the material removal region, in a case that the detected OH values obtained through the marking portions meet a requirement, actual OH values also meet the requirement. This can lower the difficulty of detecting the OH values in the electrode assembly and help improve the precision of OH value detection.

**BRIEF DESCRIPTION OF DRAWINGS**

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.

> FIG. 1 is a schematic structural diagram of mounting a battery to a vehicle according to some embodiments of the present application.

> FIG. 2 is an exploded diagram of a battery according to a first embodiment of the present application.

> FIG. 3 is an outline drawing of a battery cell according to some embodiments of the present application.

> FIG. 4 is a schematic structural diagram of an electrode assembly according to some embodiments of the present application.

> FIG. 5 is a schematic structural diagram of a first electrode plate in an unfolded state in FIG. 4.

> FIG. 6 is a schematic diagram of arranging a marking portion at a material removal region of a first electrode plate.

> FIG. 7 is a schematic diagram of OH values between a first electrode plate and second electrode plates.

> FIG. 8 is a schematic diagram of a positional relationship between a marking portion and an extension direction of a material removal region.

> FIG. 9 is a schematic diagram of a marking portion being deviated to one side relative to a material removal region.

> FIG. 10 is a schematic diagram of two marking portions arranged in a material removal region of a first electrode plate in a width direction Y.

> FIG. 11 is a schematic diagram of arranging marking portions in a material removal region of a first electrode plate.

> FIG. 12 is a schematic structural diagram of setting a marking portion to be a marking layer.

FIG. 13 is a schematic structural diagram of a material removal region.

FIG. 14A to FIG. 14D are schematic structural diagrams of arranging material removal regions in different ways on a first electrode plate.

FIG. 15 is a schematic structural diagram of arranging material removal regions and marking portions on a first electrode plate.

FIG. 16 is a schematic structural diagram of a first composite electrode plate.

FIG. 17 is a schematic structural diagram of a second composite electrode plate.

FIG. 18 is a flowchart of a manufacturing method of an electrode assembly according to some embodiments.

In the accompanying drawings, the accompanying drawings are not drawn to an actual scale.

Descriptions of reference numerals:

[0063]

　　100: battery cell; 101: case, 102: end cover; 103: electrode terminal;

　　10: electrode assembly; 10A: first composite electrode plate; 10B: second composite electrode plate; 1: first electrode plate; 11: current collector, 12: active material layer; 121: active material region; 13: material removal region; 131: first side edge; 132: score; 133: second through groove; 14: marking portion; 141: second side edge; 14A: first through groove; 14B: marking layer; 2: second electrode plate; 3: spacer; S: bent portion; S1: straight section; S2: bent section; X: opening direction; Y: width direction; Z: stacking direction; T: thickness direction; L: extension direction;

　　200: battery; 201: box body assembly; 201A: box body; 201B: cover body;

　　300: vehicle; 301: axle; 302: wheel; 303: motor; and 304: controller.

**DETAILED DESCRIPTION**

Embodiments of the present application are described in further detail below in conjunction with the drawings and embodiments. The following detailed description of the embodiments and the accompanying drawings are used to exemplarily explain the principles of the present application, but should not be configured to limit the scope of the present application, that is, the present application is not limited to the described embodiments.

In the descriptions of the embodiments of the present application, the term "plurality" refers to more than two (including two), and similarly, "a plurality of groups" refers to more than two groups (including two groups); and "a plurality of sheets" refers to more than two sheets (including two sheets).

The orientations or positional relationships indicated by the terms "upper", "lower", "top", "bottom", "front", "rear", "inner", "outer" and the like are used in the present application only for facilitating the description of the present application, rather than indicating or implying that the apparatus referred to needs to have a particular orientation or be constructed and operated in a particular orientation, and therefore they shall not be interpreted as limiting the protection scope of the present application.

In addition, the terms "first", "second", "third", and the like are only for the purpose of description, and may not be understood as indicating or implying the relative importance. "Perpendicular" is not strictly perpendicular, but within the allowable range of errors. "Parallel" is not strictly parallel, but within the allowable range of errors. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in conjunction with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

An existing battery cell generally includes a case and an electrode assembly accommodated in the case, and the case is filled with electrolyte. The electrode assembly is mainly formed by stacking or winding a first electrode plate and a second electrode plate having a polarity opposite to that of the first electrode plate.

Furthermore, an insulating member, for example, a membrane, is generally arranged between the first electrode plate and the second electrode plate. Portions of both the first electrode plate and the second electrode plate that are coated with active materials constitute a main body part of the electrode assembly, and portions of both the first electrode plate and the second electrode plate that are not coated with active materials respectively constitute a first tab and a second tab. In a battery cell, the first electrode plate may be a positive electrode plate, including a positive current collection member and positive active material layers arranged on two sides of the positive current collection member. The positive current collector may use a metal foil or a composite current collector. For example, as the metal foil, silver surface-treated aluminum or stainless steel, stainless steel, copper, aluminum, nickel, baked carbon, carbon, nickel, titanium, or the like can be used. The composite current collector may include a polymer material substrate layer and a metal layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). Each positive active material layer may include at least one of the following materials: a lithium-containing phosphate, a lithium transition metal oxide, and their respective modified compounds. However, the present application is not limited to these materials, or other conventional materials that can be used as positive active materials of batteries can be used. These positive active materials may be used alone or two or more of these positive active materials may be combined for use. Each second electrode plate may be a negative electrode plate, including a negative current collection member and negative active material layers arranged on two sides of the negative current collection member. The negative current collector may use a metal foil or a composite current collector. For example, as the metal foil, silver surface-treated aluminum or stainless steel, stainless steel, copper, aluminum, nickel, baked carbon, carbon, nickel, titanium, or the like can be used. The composite current collector may include a polymer material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). The negative active material layers may use a negative active material that are commonly known in this field and are applied to batteries. As an example, the negative active material may include at least one of the following materials: artificial graphite, natural graphite, soft carbon, hard carbon, a silicon-based material, a tin-based material, lithium titanate, and the like. Optionally, the first electrode plate can also be a negative electrode plate, and correspondingly, each second electrode plate can be a positive electrode plate. The first tab and the second tab can be located at one end of the main body part jointly or at two ends of the main body part separately. In charging and discharging processes of the battery cell, the positive active material and the negative active material react with the electrolyte, and the tabs are connected to electrode terminals to form a current loop.

Stacked type electrode assemblies are increasingly used in the battery cells. Researchers have found that it is difficult for the electrode assembly to achieve optimal performance at present. One of the important factors is that the size of the negative active material that is beyond the positive active material (overhang, referred to as OH) difficultly meets a predetermined requirement. If the requirement is not met, it may be difficult to embed metal ions into an edge region of a negative active material region, causing metal precipitation. Furthermore, it is also difficult for the positive active material to fully function, thus affecting the performance of the electrode assembly. In addition, this will significantly shorten the cycle life of the electrode assembly and limit the fast charging capacity of a battery, and may also cause safety issues such as combustion and explosion.

In order to ensure that the size of the negative active material that is beyond the positive active material meets the predetermined requirement, this parameter needs to be detected during the formation of the electrode assembly, and the detection precision directly affects the performance of the electrode assembly.

For an electrode assembly using cut electrode plates as both a positive electrode plate and a negative electrode plate, it is relatively easy to detect an OH value. However, for an electrode assembly that uses continuous electrode plates as negative electrode plates, scores can be formed at bends to facilitate folding. During OH detection, the OH value is a distance between an edge of a score and an edge of a positive electrode plate. In order to improve the precision of a folding position, thin scores may be formed, making it more difficult to identify edges of the scores, so it is difficult to ensure both precision of the folding position and the precision of OH value detection.

Based on the above problems, the present application provides an improved electrode assembly, including a first electrode plate. The first electrode plate includes a current collector and active material layers. The active material layers are arranged on the current collector; the active material layer is provided with a plurality of material removal regions at intervals in an extension direction of the first electrode plate; the material removal region extends in a width direction of the first electrode plate; the active material layer is provided with a marking portion, a width of the marking portion in the extension direction is greater than or equal to a width of the material removal region, and the marking portion spans across the material removal region.

The electrode assembly of the present application uses continuous first electrode plates, by the arrangement of the material removal regions, it is convenient for bending. In order to improve the precision of a folding position, the material removal regions are set to be thinner, or the optical performance of the material removal regions is indistinguishable from that of an edge of an active material region, or second electrode plates are not on the same side as the material removal regions. For these situations where it is difficult to identify edges of the material removal regions, OH values can be detected with the help of the marking portions. Since the width of the marking portion is not less than the width of the material removal region and the marking portion spans across the material removal region, in a case that the detected OH values obtained through the marking portions meet a requirement, actual OH values also meet the requirement. This can lower the difficulty of detecting the OH values in the electrode assembly and help improve the precision of OH value detection.

The battery cell according to the embodiments of the present application is applicable to a battery and an electrical apparatus using this battery cell. The battery is also applicable to an electrical apparatus.

The battery according to the embodiments of the present application is also applied to an electrical apparatus. The electrical apparatus can be a storage battery car, an electric vehicle, a ship, a spacecraft, or the like. For example, the spacecraft includes an airplane, a rocket, a space shuttle, a spaceship, and the like.

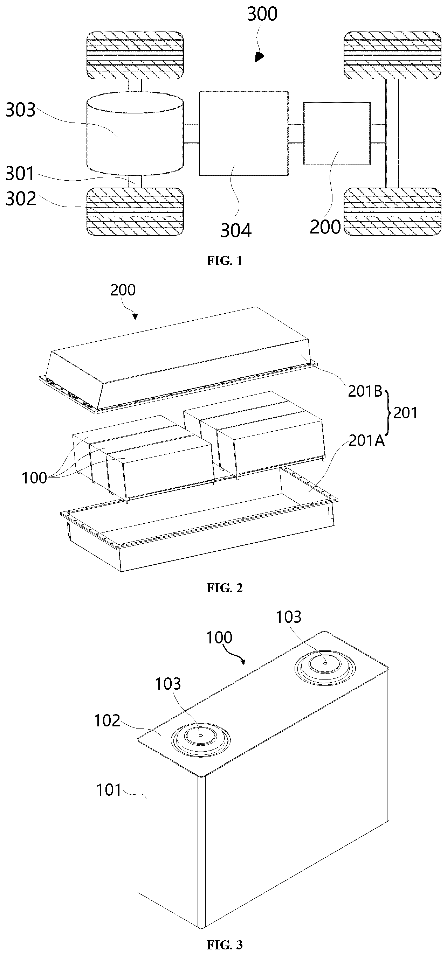

As shown in FIG. 1, the electrical apparatus may be a vehicle 300, which may be, for example, a new-energy vehicle. The new-energy vehicle may be an all-electric vehicle, a hybrid electric vehicle, an extended range electric vehicle, and the like, or the electrical apparatus may be an unmanned aerial vehicle, a ship, or the like. Specifically, the vehicle 300 may include an axle 301, wheels 302 connected to the axle 301, a motor 303, a controller 304, and a battery 200. The motor 303 is configured to drive the axle 301 to rotate, and the controller 304 is configured to control the motor 303 to work. The battery 200 may be arranged at a bottom, head, or tail of the vehicle 300 to provide electrical energy for the operation of the motor 303 and other components in the vehicle.

As shown in FIG. 2, the battery 200 includes a box body assembly 201 and a battery cell 100. The battery 200 may include one or a plurality of battery cells 100. If there are a plurality of battery cells 100, the plurality of battery cells 100 may be connected in series or in parallel or may be in parallel-series connection. The parallel-series connection means that the plurality of battery cells 100 are connected in series and in parallel. It may be that the plurality of battery cells 100 are connected in series or in parallel or are in parallel-series connection first to form a plurality of battery modules, and the plurality of battery modules are connected in series or in parallel or are in parallel-series connection to form an entirety which is accommodated in the box body assembly 201. Or, all the battery cells 100 may be directly connected in series or in parallel or may be in parallel-series connection, and then an entirety composed of all the battery cells 100 is accommodated in the box body assembly 201.

The box body assembly 201 can be a portion of a battery pack. The box body assembly 201 can be detachably mounted on the electrical apparatus, or the box body assembly 201 can be a space that is formed by a structural member in the electrical apparatus and is configured to accommodate the battery cells 100. For example, when the battery cells 100 are applied to the vehicle 300, the box body assembly 201 is a space that is formed by a frame and is configured to accommodate the battery cells 100.

The box body assembly 201 is internally hollow, which is configured to accommodate one or more battery cells 100. The box body assembly 201 can also have different shapes and sizes according to a shape, quantity, combination manner and other requirements of the battery cells 100 accommodated. For example, the box body assembly 201 may include: a box body 201A and a cover body 201B. The box body 201A has an opening, and the cover body 201B is configured to close an opening of the box body 201A. In FIG. 2, according to an arrangement manner of the plurality of battery cells 100, the box body 201A is of a rectangular tubular structure.

FIG. 3 is an outline drawing of a battery cell 100 according to some embodiments. The battery cell may be a secondary battery. The secondary battery refers to a battery cell that can be used continually by activating an active material in a charging manner after the battery cell 100 is discharged.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

In some implementations, the battery cell may include a shell and an electrode assembly. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

In some implementations, the shell includes an end cover 102 and a case 101. The case 101 is provided with an opening, and the end cover 102 closes the opening to form a closed space for accommodating substances such as the electrode assembly and the electrolyte. The case 101 may be provided with one or a plurality of openings. There may be one or more end covers 102.

In some implementations, the shell is provided with at least one electrode terminal 103, and the electrode terminal 103 is electrically connected to a tab of the electrode assembly. The electrode terminal 103 may be directly connected to the tab, or may be indirectly connected to the tab through an adapter component. The electrode terminal 103 may be arranged on the end cover 102, or may be arranged on the case 101.

The structure of the electrode assembly 10 in the battery cell 100 of the present application will be described below.

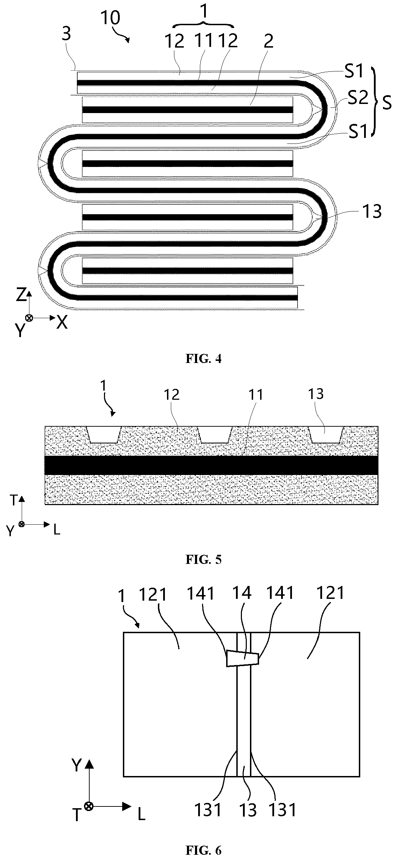

In some embodiments, as shown in FIG. 4 to FIG. 6, the present application provides an electrode assembly 10, including a first electrode plate 1. The first electrode plate 1 includes a current collector 11 and active material layers 12. The active material layers 12 are arranged on the current collector 11; the active material layer 12 is provided with a plurality of material removal regions 13 at intervals in an extension direction L of the first electrode plate 1; the material removal region 13 extends in a width direction Y of the first electrode plate 1; the active material layer 12 is provided with a marking portion 14; and a width of the marking portion 14 in the extension direction L is greater than or equal to a width of the material removal region 13, and the marking portion spans across the material removal region 13.

FIG. 4 is a schematic structural diagram of the electrode assembly 10 formed by folding. The extension direction L of the first electrode plate 1 in the electrode assembly 10 is a bent extension path; X is an opening direction of a bent section S2, and Y is a width direction of the electrode assembly 10; and Z is a stacking direction of a plurality of straight sections S1. FIG. 5 is a schematic structural diagram of the first electrode plate 1 in an unfolded state. L is an extension direction of the first electrode plate 1, that is, a lengthwise direction. T is a thickness direction of the first electrode plate 1. Y is a width direction of the first electrode plate 1.

The first electrode plate 1 can be a long-strip continuous electrode plate, which can be bent along the plurality of material removal regions 13, and a bend is formed at each material removal region 13. The bend is a position where the extension direction of the first electrode plate 1 changes, and a stacked type electrode assembly 10 can be formed after the bending. The material removal regions 13 can guide the first electrode plate 1 to be bent, so as to accurately fold the first electrode plate at a predetermined position, thereby reducing the amount of misalignment of a plurality of layers of electrode plates, improving the flatness of the first electrode plate 1 after folding, and improving the performance of the electrode assembly 10.

The active material layers 12 are arranged on a surface of the current collector 11 perpendicular to the thickness direction T. The active material layers 12 may be arranged only on one side of the current collector 11, or the active material layers 12 are arranged on two sides of the current collector 11. The material removal regions 13 can be formed in surfaces of the active material layers 12 away from the current collectors 11 to reduce the intensity of the first electrode plate 1 at the bend, so that it is convenient to bend the first electrode plate 1. The material removal regions 13 extend in the width direction Y of the first electrode plate 1 and may extend continuously or intermittently. The material removal regions may extend over the entire width of the first electrode plate 1 or may extend over a portion of the width.

Each active material layer 12 is provided with the marking portion 14. For example, the marking portion 14 can be a marking layer, such as glue application or painting, or can be a through groove penetrating through the first electrode plate 1. If the marking portion 14 protrudes out of a surface of the active material layer 12, a protruding size should be controlled to a small value to avoid an influence on the folding of the electrode assembly 10. Moreover, at the same bend, the marking portion 14 and the material removal region 13 can be located on the same side or on different sides.

The width of the marking portion 14 in the extension direction L is greater than or equal to the width of the material removal region 13, and the marking portion spans across the material removal region 13. For example, the width of the marking portion 14 is consistent with the width of the material removal region 13, and the marking portion and the material removal region are aligned in the extension direction L of the first electrode plate 1. Or, the width of the marking portion 14 is greater than the width of the material removal region 13, as shown in FIG. 6. During the arrangement, two side edges of the marking portion 14 can be respectively beyond two side edges of the material removal region, or one side edge of the marking portion 14 overlaps a corresponding side edge of the material removal region 13, and the other side edge of the marking portion 14 is beyond the corresponding side edge of the material removal region 13.

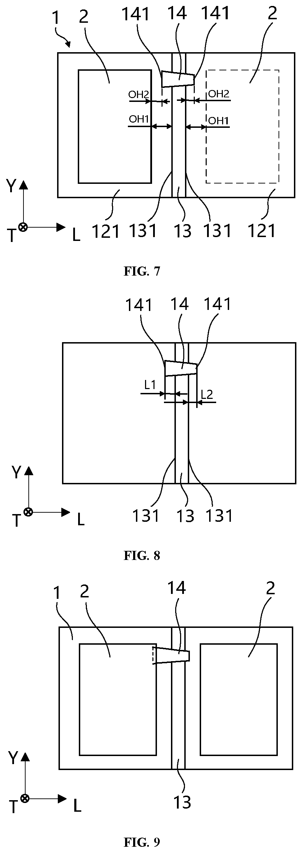

As shown in FIG. 7, second electrode plates 2 are alternately arranged, in the extension direction L, on two sides of the first electrode plate 1 in the thickness direction T. The second electrode plates 2 and the first electrode plate 1 have opposite polarities. The active material layer 12 on each side includes a plurality of active material regions 121 spaced apart in the extension direction L. The material removal regions 13 are formed between adjacent active material regions 121. For the plurality of active material regions 121 on the same side, two adjacent second electrode plates 2 are spaced apart by one active material region 121.

A minimum distance between an edge of each material removal region 13 in the extension direction L and an edge of the second electrode plate 2 adjacent to the material removal region is an actual OH value, represented by OH1. During detection, since the material removal regions 13 are thin (100 um to 300 um), and their optical performance is indistinguishable from the optical performance of an edge of an active material region, or since the second electrodes plate 2 and the material removal regions 13 are not on the same side, it is difficult to obtain the edge of the material removal region. Therefore, the marking portions 14 can be used for detection. A minimum distance between an edge of each marking portion 14 in the extension direction L and an edge of the second electrode plate 2 adj acent to the marking portion is used as a detected OH value, represented by OH2, OH2<OH1. Therefore, if the detected OH value is not less than a target OH value, an actual OH value is also not less than the target OH value. When the detected OH values of all the second electrode plates 2 are not less than the target OH value, it is determined that the OH values of the electrode assembly 10 are qualified.

In this embodiment, for the electrode assembly 10 using continuous electrode plates as the first electrode plate 1, by the arrangement of the material removal regions 13, it is convenient for bending. In order to improve the precision of a folding position, the material removal regions 13 are set to be thin, or the optical performance of the material removal regions is indistinguishable from that of an edge of an active material region, or the second electrode plates 2 are not on the same side as the material removal regions 13. For these situations where it is difficult to identify the edges of the material removal regions 13, the OH values can be detected with the help of the marking portions 14. Since the width of the marking portion 14 is not less than the width of the material removal region 13 and the marking portion spans across the material removal region 13, in a case that the detected OH values obtained through the marking portions 14 meet a requirement, the actual OH values also meet the requirement. This can lower the difficulty of detecting the OH value in the electrode assembly 10 and help improve the precision of OH value detection.

Therefore, the precision of a folding position of the first electrode plate 1 and the precision of OH value detection can be ensured at the same time. Improving the precision of a folding position can reduce the amount of misalignment of a plurality of layers of electrode plates and improve the flatness of the first electrode plate 1 after folding, and improving the precision of OH value detection can prevent metal precipitation and enable a positive active material to fully function. Therefore, the performance of the electrode assembly 10 can be improved. Furthermore, the cycle life of the electrode assembly 10 can be prolonged, the fast charging capacity of the battery cell can be increased, and the risk of safety issues such as combustion and explosion can be lowered.

In some embodiments, as shown in FIG. 7, the first electrode plate 1 is a negative electrode plate.

When the first electrode plate 1 is the negative electrode plate, the current collector 11 of the first electrode plate 1 is a negative current collector, and the active material layers 12 are negative active material layers. Correspondingly, each second electrode plate 2 is a positive electrode plate. The current collector 11 of the second electrode plate 2 is a positive current collector, and the active material layers 12 are positive active material layers.

Optionally, the first electrode plate 1 is a positive electrode plate, the current collector 11 is a positive current collector, and the active material layers 12 are positive active material layers. Materials of the positive and negative current collectors and materials of the positive and negative active material layers have been described previously.

The active material layer 12 on each side of the first electrode plate 1 may include a plurality of active material regions 121 spaced apart in the extension direction L. The material removal regions 13 are formed between adjacent active material regions 121. For the plurality of active material regions 121 on the same side, two adjacent second electrode plates 2 are spaced apart by one active material region 121. For each active material region 121 provided with the second electrode plate 2, in order to meet an overhang requirement, various edges of the active material region 121 should be beyond an edge of the second electrode plate 2, so as to facilitate mounting of a capturing component above the electrode plate to obtain an image. The image can directly reflect a positional relationship between the second electrode plate 2 and the active material region 121, so as to calculate the OH value.

In this embodiment, the first electrode plate 1 is set to be the negative electrode plate. In order to meet the overhang requirement, an edge of the material removal region 13 of the negative electrode plate needs to be beyond an edge of the second electrode plate 2 with a positive polarity, and an edge of each marking portion 14 in the extension direction L will not be covered by the second electrode plate 2, so that the OH value can be detected intuitively and conveniently, which can improve the detection efficiency and improve the precision of OH value detection, thereby improving the performance of the electrode assembly 10.

In some embodiments, the active material layers 12 are respectively arranged on two sides of the current collector 11; and the active material layers 12 on the two sides are provided with the marking portions 14 at a position where each material removal region 13 is located.

At the same bend, if the active material layers 12 on the two sides are provided with the material removal regions 13, or if the material removal regions 13 penetrate through the first electrode plates 1, one marking portion 14 is arranged on each of the two sides. Each marking portion 14 is intersected with the material removal region 13 on the same side and spans across the material removal region 13 on the same side. At the same bend, if the active material layer 12 on only one side is provided with the material removal regions 13, the marking portion 14 on one side is intersected with the material removal region 13 on the same side and spans across the material removal region 13 on the same side. The marking portion 14 on the other side is arranged on the basis of the position of the material removal region 13.

In this embodiment, considering that second electrode plates 2 with opposite polarities to that of the first electrode plate are arranged on the two sides of the first electrode plate 1, since the marking portions 14 are arranged on the two sides of the first electrode plate 1, it is possible to easily detect the OH values corresponding to the second electrode plates 2 on the two sides. This can improve the detection efficiency and improve the precision of OH value detection, thereby improving the performance of the electrode assembly 10.

In some embodiments, as shown in FIG. 7, in the extension direction L, the material removal region 13 has two first side edges 131 spaced apart; in the extension direction L, the marking portion 14 has two second side edges 141 spaced apart; and at least a portion of the second side edges 141 is parallel to the first side edges 131.

A distance between the two second side edges 141 is greater than or equal to a distance between the two first side edges 131. The second side edges 141 can overlap the first side edges 131, or the second side edges 141 are located on outer sides of the first side edges 131. The outer sides are sides that are farther from the material removal region relative to the first side edges 131.

Sizes of the two second side edges 141 of the marking portion 14 in the width direction Y may be equal, for example, the marking portion 14 is a rectangle or a parallelogram; or, sizes of the two second side edges 141 in the width direction Y may be unequal, for example, the marking portion 14 is a trapezoid, as long as a section of the second side edges 141 of the marking portion 14 is parallel to a straight line of the first side edges 131. Preferably, the second side edges 141 are entirely parallel to the first side edges 131, and both the second side edges 141 and the first side edges 131 can extend in the width direction Y.

In this embodiment, at least a portion of length sections of the second side edges 141 of the marking portions 14 is parallel to the first side edges 131. During the detection of the OH values, distances between the parallel sections on the second side edges 141 and the second electrode plates 2 can be measured as detected OH values, so that it is easier to select detection points on the marking portions 14. Furthermore, the length sections of the second side edges 141 parallel to the first side edges 131 are translated outwards in the extension direction L relative to the first side edges 131. In a case that the OH values detected through the second side edges 141 meet a requirement, the actual OH values can also meet the requirement, ensuring the reliability of OH detection.

In some embodiments, as shown in FIG. 8, the electrode assembly 10 further includes second electrode plates 2. A maximum distance between one of the second side edges 141 of the marking portion 14 and the first side edge 131 on the same side is L1, and a maximum distance between the other second side edge 141 and the first side edge 131 on the same side is L2; L1 and L2 are both less than a target OH value; and the target OH value is a minimum distance between the second side edge 141 and an edge of the second electrode plate 2 adjacent to the second side edge.

The second side edges 141 are entirely parallel to the first side edges 131. The maximum distance L1 is an outward deviation distance of one of the second side edges 141 relative to the first side edge 131 on the same side, and the maximum distance L2 is an outward deviation distance of the other second side edge 141 and the first side edge 131 on the same side.

This embodiment makes L1 and L2 both less than the target OH value, which limits the maximum distance of the second side edge 141 beyond the first side edge 131. Since the target OH value itself is small, in a case that the detected OH value is not less than the target OH value, an extremely large actual OH value can be prevented. This helps to precisely control the actual OH value and can shorten the distance of a negative active material beyond a positive active material, thereby reducing the size of the electrode assembly 10 and the waste of materials.

In some embodiments, 0.2* target OH value ≤L1≤0.95* target OH value, and 0.2* target OH value ≤L2≤0.95* target OH value.

For example, L1 and L2 can be 0.2, 0.25, 0.3, 0.35, 0.4, 0.45, 0.5, 0.55, 0.6, 0.65, 0.7, 0.75, 0.8, 0.85, 0.9, or 0.95 times the target OH value.

In this embodiment, for different electrode assemblies 10, connections between L1, as well as L2, and the target OH value are constructed. By arranging a proportion range of L1 and L2 relative to the target OH value, a lower limit value can prevent such a phenomenon that it is hard to identify the second side edges 141 and the first side edges 131 if the second side edges are close to the first side edges, and the edges of the marking portion 14 can be reliably identified during the OH detection, thereby improving the convenience and precision of OH detection, and an upper limit value can prevent an extremely large actual OH value. This helps to precisely control the actual OH value and can shorten the distance of a negative active material beyond a positive active material, thereby reducing the size of the electrode assembly 10 and the waste of materials.

In some embodiments, L1≤1 mm, L2≤1 mm.

For example, L1 and L2 can be 0.1 mm, 0.2 mm, 0.3 mm, 0.4 mm, 0.5 mm, 0.6 mm, 0.7 mm, 0.8 mm, 0.9 mm, 1 mm, or the like.

This embodiment provides the specific value ranges of L1 and L2, so that an extremely large actual OH value can be prevented. This helps to precisely control the actual OH value and can shorten the distance of a negative active material beyond a positive active material, thereby reducing the size of the electrode assembly 10 and the waste of materials.

In some embodiments, as shown in FIG. 8, a maximum distance between one of the second side edges 141 of the marking portion 14 and the first side edge 131 on the same side is L1, and a maximum distance between the other second side edge 141 and the first side edge 131 on the same side is L2; and a degree of deviation of the marking portion 14 from a center of the material removal region 13 in the extension direction L does not exceed 30%.

The degree of deviation is calculated as follows: 1. A distance H1 between the two first side edges 131 and a distance H2 between the two second side edges 141 are calculated respectively. 2. L1 or L2 is measured. 3. The degree of $deviation=\frac{|L1-0.5*(H2-H1)|}{0.5*(H2-H1)}$, or the degree of $deviation=\frac{|L2-0.5*(H2-H1)|}{0.5*(H2-H1)}$.

In this embodiment, the degree of deviation of the marking portion 14 from the material removal region 13 in the extension direction L is limited, so that the marking portion 14 is as centered as possible relative to the material removal region 13, that is, the marking portion 14 is located as much as possible in a center position between the adjacent active material regions 121. As shown in FIG. 9, this can prevent the detection OH value of one side from being less than the target OH value, and even less than 0, because of an extremely large deviation in the OH detection of the two sides of the marking portion 14. In this case, the actual OH value of this side may also meet the requirement, thereby avoiding scrapping of a normal electrode assembly 10.

In some embodiments, |L1-L2|≤0.2 mm.

This embodiment provides the specific value deviation range of L1 and L2, so that the marking portion 14 can be as centered as possible relative to the material removal region 13. This can prevent the detection OH value of one side from being less than the target OH value, and even less than 0, because of an extremely large deviation in the OH detection of the two sides of the marking portion 14. In this case, the actual OH value of this side may also meet the requirement, thereby avoiding scrapping of a normal electrode assembly 10.

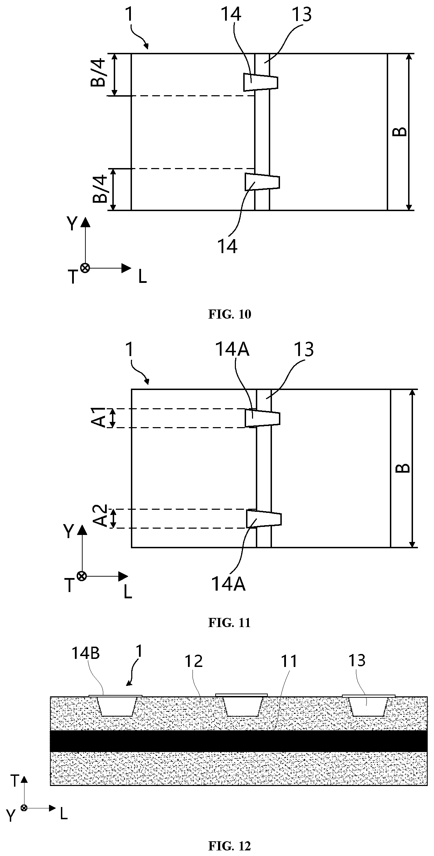

In some embodiments, as shown in FIG. 10, the active material layer 12 is provided with two marking portions 14 in the same material removal region 13. The two marking portions 14 are separately located in regions of the active material layer 12 close to two sides in the width direction Y.

Distances between the two marking portions 14 and an edge of the active material layer 12 in the width direction Y may be equal or unequal. During the production of the electrode assembly 10, each second electrode plate 2 is deflected in the width direction Y relative to the first electrode plate 1, and a minimum OH value in the width direction Y is located in regions on the two sides of the first electrode plate 1.

In this embodiment, the marking portions 14 are respectively arranged in the regions of the active material layer 12 close to the two sides in the width direction Y. In a case that an electrode plate is deflected, a minimum OH value can be obtained in the width direction Y. When the minimum OH value meets a requirement, it can reliably ensure that the detected OH values in the width direction Y all meet the requirement, and the influence of the deflection of the electrode plate on the performance of the electrode assembly 10 can be reduced.

In some embodiments, as shown in FIG. 10, the marking portions 14 are located in a region that is 1/4 of the active material layer 12 from the width edge.

The active material layer 12 on the same side is provided, in the width direction Y, with the two marking portions 14 spaced apart. A total width of the active material layer 12 in the width direction Y is B. Each marking portion 14 is located in the region that is 1/4 of the active material layer 12 from the edge. Optionally, another marking portion 14 can also be added between the two marking portions 14.

In this embodiment, no matter which direction the second electrode plate 2 is deflected to relative to the first electrode plate 1, the actual OH value detected by one marking portion 14 is small. If the small actual OH value can meet the requirement, all the detected OH values in the width direction Y meet the requirement, which can reduce the influence of the deflection of the electrode plate on the performance of the electrode assembly 10.

In some embodiments, the marking portions 14 have overlapping portions with the material removal region 13 in the width direction Y, or the marking portions 14 are located on an extension line of the material removal region 13 in the width direction Y.

The material removal region 13 extends in the entire width direction Y of the first electrode plate 1, and the marking portions 14 are arranged at any width position to overlap the material removal region 13. Or, the material removal region 13 extends in a portion of the width of the first electrode plate 1, and the marking portions 14 can be arranged at a position for overlapping the material removal region 13, or the marking portions can be arranged on the extension line of the material removal region 13.

In this embodiment, the marking portions 14 have the overlapping portions with the material removal region 13 in the width direction Y, which can improve the position precision of the marking portions 14 relative to the material removal region 13 in the extension direction L, so that it is convenient for positioning during the arrangement of the marking portions 14. By the arrangement of the marking portions 14 on the extension line of the material removal region 13 in the width direction Y, the arrangement positions of the marking portions 14 can be selected more flexibly. Moreover, if the marking portions 14 are through grooves, an excessive decrease in the intensity of the first electrode plate 1 due to the overlapping between the marking portions 14 and the material removal region 13 can be prevented, and breakage during bending formation or use can be avoided.

In some implementations, as shown in FIG. 11, the marking portion 14 includes a first through groove 14A.

The first through groove 14A penetrates through the entire thickness of the first electrode plate 1. The first through groove 14A can be a rectangle, a parallelogram, a trapezoid, or the like, and can be formed by laser processing or machining.

In this embodiment, the marking portion 14 is set as the first through groove 14A, which can assist the material removal region 13 in decreasing the intensity of the first electrode plate 1 and assist in folding, and the first through groove 14A is easy to process. If the material removal region 13 is formed by laser processing, the material removal region 13 and the first through groove 14A can be processed using the same laser device, without adding an additional device. Moreover, due to the first through grooves 14A, the need of arranging the marking portions 14 respectively for the active material layers 12 on the two sides is avoided, so that detection references of the OH values on the two sides of the first electrode plate 1 can be unified, and the precision of OH value detection can be improved. In addition, when an OH value is calculated using an image obtained by a capturing component, the first through groove 14A can be light-transmissive, which is conductive to capturing the second side edges 141 of the marking portions 14, thereby improving the precision of OH detection.

In some embodiments, as shown in FIG. 11, in the width direction Y, a total width of all the first through grooves 14A on the active material layers 12 is A, a width of the material removal region 13 is B, and 2%≤A/B≤50%.

For example, each material removal region 13 may extend along the entire width of each active material layer 12. The width of the material removal region 13 is B. There are two first through grooves 14A, maximum widths of which are A1 and A2, respectively. The maximum total width of the two first through grooves 14A is A.

For example, values that can be selected for A/B are: 2%, 5%, 10%, 15%, 20%, 25%, 30%, 35%, 40%, 45%, and 50%, or can be other proportion values in the above range.

In this embodiment, by limiting a lower limit value of A/B, such a phenomenon that it is not easy to capture the second side edges because 141 because the second side edges 141 are too short due to the extremely small width of the marking portion 14 can be prevented, so that the convenience and precision of OH value detection can be improved. By limiting an upper limit value of A/B, such a phenomenon that the intensity of the first electrode plate 1 is affected by the extremely large width of the marking portion 14 can be prevented, and breakage during bending formation or use can be avoided.

In some embodiments, as shown in FIG. 12, the marking portion 14 includes a marking layer 14B, and the marking layer 14B and the active material layer 12 have different colors.

For example, the marking layer 14B can be formed by glue application or painting. The marking layer 14B can be white or in a color that has a great contrast with the color of the active material layer 12. The marking layer has a good optical characteristic, and its edge can be easily captured during detection.

In this embodiment, the marking portion 14 is set to be the marking layer 14B, which can prevent the influence of the marking portion 14 on the intensity of the first electrode plate 1 and avoid breakage during bending formation or use. Moreover, since the marking layer 14B is distinguished from the active material layer 12 in color, it is easy to capture the edge of the marking layer 14B through the optical characteristic, which can improve the convenience and precision of OH value detection.

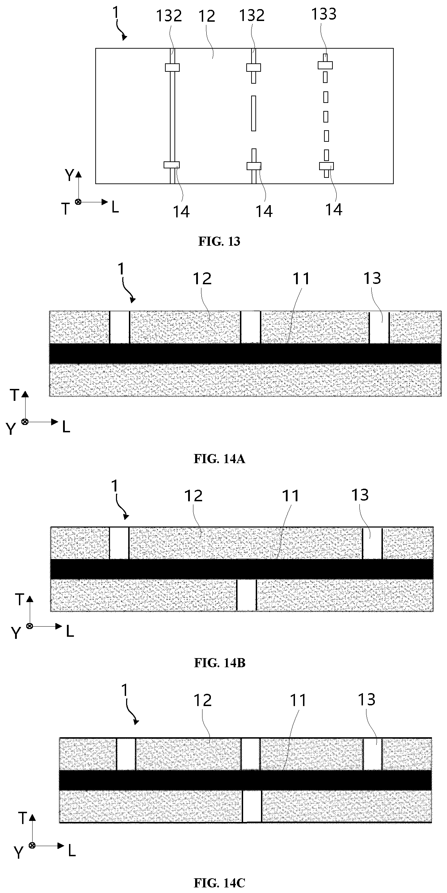

In some embodiments, as shown in FIG. 13, the material removal region 13 includes at least one of a continuous score 132, a discontinuous score 132, and a second through groove 133.

FIG. 13 shows a structure of the material removal region 13 at three bends. The continuous score 132 is on the left hand side. The score 132 can extend along the entire width or a portion of the width of the active material layer 12. The discontinuous score 132 is in the middle. A plurality of second through grooves 133 that are arranged at intervals in the width direction Y are on the right hand side. A width of each second through groove 133 in the extension direction L may be greater than that of the score 132.

When the material removal region 13 is the score 132, it can be formed by a metal tool, a laser tool, liquid etching, or another method. A cross section of the score 132 may be a rectangle, a trapezoid, a triangle, or the like. A depth of the material removal region 13 may not exceed a thickness of the active material layer 12 where the material removal region is located, so that the depth of the material removal region 13 does not affect the current collector 11. This can avoid breakage during folding and improve the yield of the electrode assembly 10 and can also avoid breakage at the material removal region 13 due to expansive deformation of the electrode plate after long-term use of the battery cell. Optionally, the depth of the material removal region 13 may also exceed the thickness of the active material layer 12 where the material removal region is located, that is, the material removal region 13 will simultaneously remove materials of the active material layer 12 and the current collector 11.

When the material removal region 13 includes the plurality of second through grooves 133, the second through grooves 133 may be circular grooves, rectangular grooves, elliptical grooves, rhombic grooves, and the like. A ratio of a sum of the widths of the plurality of second through grooves 133 to the width of the first electrode plate 1 should be limited to avoid breakage during bending formation or use.

Optionally, the score 132 and the second through grooves 133 can also be provided in a superposition manner.

In this embodiment, different material removal regions 13 or combinations can be flexibly selected according to an actual need. The score 132 is convenient to process and has a better effect of guiding the bending of the first electrode plate 1. Moreover, this method for processing the material removal regions 13 can achieve a small width. This can improve the precision of a bending position and reduce the amount of misalignment after stacking of two layers of adjacent electrode plates in the electrode assembly 10, so that a battery has good electrochemical performance. Since the first electrode plate 1 is thin, it is not necessary to accurately control a depth of a groove due to the arrangement of the second through groove 133, which can lower the requirement on the processing precision. Moreover, the second through groove 133 can greatly reduce the intensity of the first electrode plate 1, so that the first electrode plate is easy to bend.

In some embodiments, as shown in FIG. 4, the electrode assembly 10 further includes second electrode plates 2; the first electrode plate 1 is bent to form at least one bent portion S; each bent portion S includes at least one bent section S2 and at least two straight sections S1, and two adjacent straight sections S1 are connected through the bent section S2; for each bent portion S, the second electrode plate 2 is arranged between two adjacent straight sections S1; and the second electrode plate 2 and the first electrode plate 1 adjacent to the second electrode plate have opposite polarities.

The electrode assembly 10 uses a stacked type. There is at least one second electrode plate 2. Each second electrode plate 2 is a discrete cut electrode plate, which can be of a rectangular structure with a length and width close to each other. The product of the electrode assembly 10 is of a flat plate structure. A layer of each second electrode plate 2 is formed in a stacking direction Z.

The first electrode plate 1 is bent to form at least one bent portion S. When at least two bent portions S are formed, the at least two bent portions S are connected in sequence to form a continuously bent structure. For one bent portion S, the at least two straight sections S1 are stacked in the stacking direction Z, and two adjacent straight sections S1 are connected through the bent section S2. The bent section S2 can be of a cambered structure, for example, an arc structure. For the adjacent bent portions S, two straight sections S1 that are close to each other in the adjacent bent portions S are also connected through the bent portions S. Therefore, the entire composite electrode plate formed by bending includes the at least two straight sections S1 arranged in the stacking direction Z. All the straight sections S1 are connected in sequence through the bent sections S2. One second electrode plate 2 can be arranged between every two adjacent straight sections S1.

Each bent portion S can be V-shaped, Z-shaped, W-shaped, or the like. For example, when the bent portion S is V-shaped, the bent portion S includes two straight sections S1 and one bent section S2; when the bent portion S is Z-shaped, the bent portion S includes three straight sections S1 and two bent sections S2, and the two bent sections S2 have opposite orientations; and when the bent portion S is W-shaped, the bent portion S includes four straight sections S1 and three bent sections S2.

For each bent portion S, the second electrode plate 2 is arranged between two adjacent straight sections S1. For adjacent bent portions S, each second electrode plate 2 can also be arranged between two straight sections S1 that are close to each other. The second electrode plate 2 is arranged between every two adjacent straight sections S1 in the electrode assembly 10, and the second electrode plate 2 and the first electrode plate 1 adjacent to the second electrode plate have opposite polarities.

None of end portions of the second electrode plates 2 in an opening direction X of the bent sections S2 is beyond the straight sections S1. A first end of the second electrode plate 2 is close to the bent portion S, and the first end is not beyond a connection between the straight section S1 and an inner surface of the bent section S2, which can prevent the first end of the second electrode plate 2 from being pressed against the bent portion S2, avoid an edge of the second electrode plate 2 from warping, and avoid the phenomenon that an active material falls off from an inner side of the bent portion S2. A second end of the second electrode plate 2 is away from the bent section S2, and the second end is not beyond a connection between the straight section S1 and an outer side surface of the adjacent bent section S2, so that the straight section S1 can stably support the entire second electrode plate 2 to prevent the edge of the second electrode plate 2 from being beyond the straight section S1 and overhung in the air to deform. This structure allows the straight section S1 to stably support the second electrode plate 2, prevents the edge of the second electrode plate 2 from warping and deforming, so that the electrode assembly 10 is flatter after being compacted. This structure can also prevent the second electrode plate 1 from being pressed against the inner side surface of the bent portion S2, causing the active material to fall off. Thus, the performance of the electrode assembly 10 can be ensured.

For example, the electrode assembly 10 in FIG. 4 is formed by bending the first electrode plate 1 shown in FIG. 5. The plurality of material removal regions 13 are arranged at intervals on the active material layer 12 on the same side in the extension direction L. After the first electrode plate 1 is bent, the plurality of material removal regions 13 are arranged alternately on inner and outer sides of the plurality of bent portions S2.

In addition, the first electrode plate 1 can also be formed by bending the first electrode plate 1 shown in FIG. 14A to FIG. 14D.

As shown in FIG. 14A, a plurality of material removal regions 13 are arranged at intervals on an active material layer 12 on the same side in an extension direction L. The active material layer 12 may include a plurality of active material regions 121 arranged at intervals in the extension direction L, and adjacent active material regions 121 directly form the material removal regions 13.

As shown in FIG. 14B, active material layers 12 on two sides are provided with material removal regions 13, and the material removal regions 13 on the two sides are alternately arranged and staggered from each other. After the electrode assembly 10 is formed, all the material removal regions 13 can be located on inner sides or outer sides of bent sections S2.

As shown in FIG. 14C, active material layers 12 on two sides are provided with material removal regions 13, and a second preset distance between adjacent material removal regions 13 on a second side is twice a distance between adjacent material removal regions 13 on a first side. Bends of the material removal regions 13 are arranged on the two sides, and the material removal regions 13 on the two sides are arranged in a directly facing manner. After the electrode assembly 10 is formed, for bent portions S2 on one side, the material removal regions 13 are arranged on inner and outer sides of the bent portions S2 in the directly facing manner. For bent portions S2 on the other side, the material removal regions 13 are arranged only on inner sides of the bent portions S2.

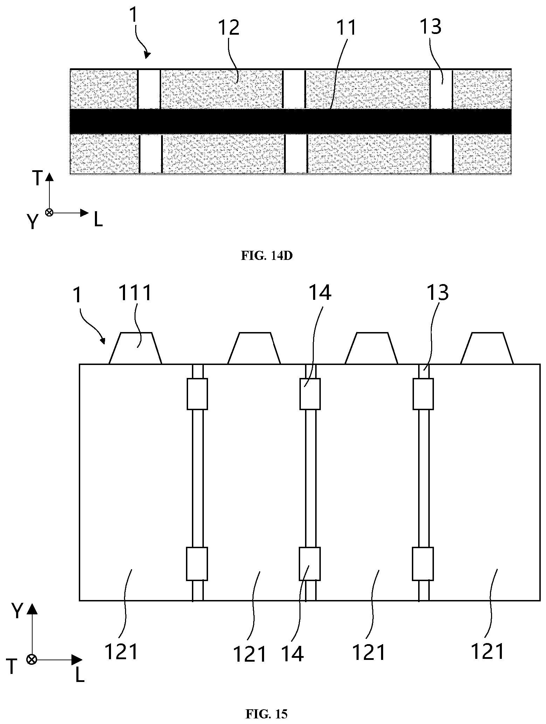

As shown in FIG. 14D, active material layers 12 on two sides are provided with material removal regions 13, and quantities of the material removal regions 13 on the active material layers 12 on the two sides are equal. One material removal region 13 is arranged at each bend, and the bends of the material removal regions 13 are arranged on the two sides. The material removal regions 13 on the two sides are arranged in a directly facing manner. After the electrode assembly 10 is formed, the material removal regions 13 are arranged on both inner and outer sides of each bent portion S2 in the directly facing manner.

In this embodiment, the material removal region 13 is arranged in each bent section S2, so that the first electrode plate 1 can be guided to be folded along the material removal region 13, and the first electrode plate 1 is bent more easily. This can accurately fold the first electrode plate at a predetermined position, thereby reducing the amount of misalignment of a plurality of layers of electrode plates, improving the flatness of the first electrode plate 1 after folding, and improving the performanc e of the electrode assembly 10. Moreover, the marking portions 14 will not affect the bending of the first electrode plate 1 on the basis of facilitating the OH value detection, and the OH value detection can be performed before the first electrode plate 1 is bent.

In some embodiments, as shown in FIG. 4, in an opening direction X of each bent portion S, each second electrode plate 2 is located between two adjacent marking portions 14; and the marking portions 14 are spaced apart from an edge of the second electrode plate 2.

Specifically, the second side edges 141 of the marking portions 14 are spaced apart from the edge of the second electrode plate 2 in the opening direction X, that is, the marking portions 14 all expose the second electrode plate 2, and the second electrode plate 2 may not press the second side edges 141 of the marking portions 14.

In this embodiment, after the electrode assembly 10 is formed, the marking portions 14 and the edge of the second electrode plate 2 are still spaced apart, so that an edge of a negative active material region is beyond an edge of a positive active material region, and the first electrode plate 1 and the second electrode plate 2 meet an overhang requirement.

In some embodiments, the electrode assembly 10 further includes two spacers 3. The spacers are stacked with the first electrode plate 1 and bent together to form at least one bent portion S. The first electrode plate 1 is arranged on the two adjacent spacers 3.

The spacers 3 can be separators. There is no particular limitation on the type of the separators. Any commonly known porous separator with good chemical stability and mechanical stability can be used.

As an example, a main material of the separator may be at least one of a glass fiber, a non-woven fabric, polyethylene, polypropylene, polyvinylidene fluoride, and ceramic. The separator may be a single-layer film or a multilayer composite film, which is not particularly limited. When the separator is the multilayer composite film, a material in each layer may be same or different, which is not particularly limited. The spacer can be a separate component located between a positive electrode and a negative electrode, or can be attached to surfaces of the positive electrode and the negative electrode.

The spacer 3 may be solid electrolyte. The solid electrolyte simultaneously transports ions and isolates the positive electrode from the negative electrode.

The spacer 3 may include a membrane base layer and a functional layer. The membrane base layer may be at least one of polypropylene, polyethylene, an ethylene-propylene copolymer, polybutylene terephthalate, and the like, and the functional layer may be a mixture layer of ceramic oxide and a binder. After each bent portion S is spread, the spacer 3 can be a long strip. Or, in a case that the second electrode plate 2 is of a continuous long-strip structure, the spacer 3 can also be provided intermittently in the extension direction of the first electrode plate 1.

A width of the spacer 3 can be greater than that of the first electrode plate 1 to better separate a positive electrode plate from a negative electrode plate.

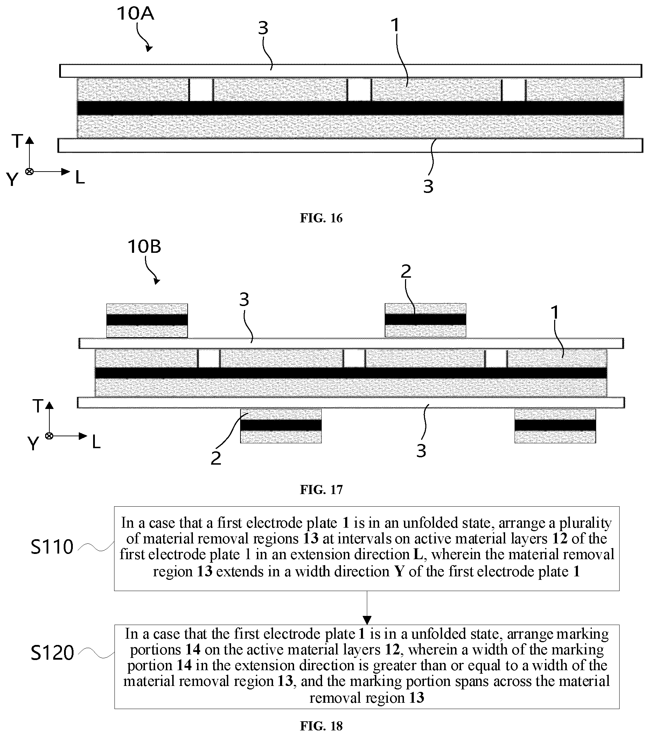

Before the electrode assembly 10 is formed, as shown in FIG. 16, the first electrode plate 1 and the two spacers 3 are first stacked and are then combined to form a continuous first composite electrode plate 10A that can be bent. The first electrode plate 1 is arranged between the two spacers 3 to play an insulating role. Adhesive layers, which are for example PVDF coated separators (PCS), can be respectively arranged on two sides of the spacers 3. PVDF is the abbreviation of poly vinylidene fluoride. In the process of heating and compounding the first electrode plate 1 and the spacers 3 and applying a pressure to them, many spotted particles in the PCS layers are flattened to generate an adhesive force on the first electrode plate 1.

Next, as shown in FIG. 17, a plurality of second electrode plates 2 are alternately placed on the two spacers 3 on the outer sides, and a pressure is applied through rollers to attach the second electrode plates 2 to the spacers 3 on the outer sides through the PCS layers, so as to form a second composite electrode plate 10B, and the second composite electrode plate 10B is then folded.

In addition, the compounding can also be performed through cold pressing, electrophoresis, or pasting.

In this embodiment, the spacers 3 and the first electrode plate 1 are bent together, so that the first electrode plate 1 and the second electrode plates 2 can be insulated by the spacers 3, thereby improving the performance and safety of the electrode assembly 10.

Secondly, the present application provides a manufacturing method of an electrode assembly 10. As shown in FIG. 18, in some embodiments, the method includes:

> S110: In a case that a first electrode plate 1 is in an unfolded state, a plurality of material removal regions 13 are arranged at intervals on active material layers 12 of the first electrode plate 1 in an extension direction L of the first electrode plate, wherein the material removal regions 13 extend in a width direction Y of the first electrode plate 1, and the active material layers 12 are arranged on a current collector 11 of the first electrode plate 1.
>
> S120: In a case that the first electrode plate 1 is in an unfolded state, marking portions 14 are arranged on the active material layers 12, wherein a width of the marking portion 14 in the extension direction L is greater than or equal to a width of the material removal region 13, and the marking portion spans across the material removal region 13.

The execution order of S110 and S120 is not limited. FIG. 14A to FIG. 14D are schematic structural diagrams of arranging material removal regions 13 in different ways on a first electrode plate 1. FIG. 15 is a schematic structural diagram of arranging marking portions 14 at positions where material removal regions 13 are located. The current collector 11 includes a main body part and tabs 111 protruding out of one side of the main body part. The active material layers 12 are located on the main body part. For example, each material removal region 13 may extend in an entire width of each active material layer 12, and each material removal region 13 is provided with one marking portion 14 at a position close to each of two side edges of the active material layer 12.

In this embodiment, for the electrode assembly 10 using continuous electrode plates as the first electrode plate 1, by the arrangement of the material removal regions 13, it is convenient for bending. In order to improve the precision of a folding position, the material removal regions 13 are set to be thin, or the optical performance of the material removal regions is indistinguishable from that of an edge of an active material region, or second electrode plates 2 are not on the same side as the material removal regions 13. For these situations where it is difficult to identify edges of the material removal regions 13, OH values can be detected with the help of the marking portions 14. Since the width of the marking portion 14 is not less than the width of the material removal region 13 and the marking portion spans across the material removal region 13, in a case that the detected OH values obtained through the marking portions 14 meet a requirement, actual OH values also meet the requirement. This can lower the difficulty of detecting the OH value in the electrode assembly 10 and help improve the precision of OH value detection. Therefore, the precision of a folding position of the first electrode plate 1 and the precision of OH value detection can be ensured at the same time.

In some embodiments, the first electrode plate 1 forms a position to be bent in each material removal region 13; and after the material removal region 13 and the marking portion 14 at the same position to be bent are formed, the first electrode plate 1 moves to the next position to be bent.

The first electrode plate 1 can be in a moving state. Every time it reaches a position to be bent, the first electrode plate 1 can be stopped moving, and after the material removal region 13 and the marking portions 14 at the position to be bent are completely formed, the material removal region 13 and the marking portions 14 at the next position to be bent are then processed.

In this embodiment, the material removal region 13 and the marking portions 14 can be formed during a single movement of the first electrode plate 1, which can simplify the technological process and prevent the long and thin first electrode plate 1 from deforming due to repeated movements; and the material removal region 13 and the marking portions 14 at the same position to be bent can be in accordance with the same processing reference, so that high precision of a relative position can be achieved.

In some embodiments, the material removal region 13 and the marking portion 14 are formed sequentially, alternately, or simultaneously at the same position to be bent.

At the same position to be bent, the material removal region 13 can be processed first, and the marking portions 14 are then formed, or the marking portions are processed first, and the material removal region is then formed. Or, the material removal region 13 is located between the two marking portions 14, or the material removal region 13 is provided intermittently, so that a plurality of sections of material removal regions 13 and the two marking portions 14 can be formed alternately. Or, the material removal region 13 and the marking portions 14 use different forming devices, so that the material removal region 13 and the marking portions 14 can be formed simultaneously. For example, the material removal region 13 is processed using a laser device, and the marking portions 14 can be processed using another laser device, a glue application device, a painting device, or the like.

In this embodiment, a processing sequence can be flexibly selected for the material removal region 13 and the marking portions 14 at the same position to be bent according to an actual situation, which can improve the production efficiency of the first electrode plate 1.

In some embodiments, the marking portion 14 includes a first through groove 14A, and the material removal region 13 and the marking portion 14 are processed through the same processing device.

For example, the processing device may be a laser processing device or a machining device. When the same processing device is used, the material removal regions 13 and the marking portions 14 are processed sequentially or alternately.

In this embodiment, the material removal regions 13 and the marking portions 14 are processed by the same processing device, and the marking portions 14 can be formed on the first electrode plate 1 without adding an additional device. There is no need to adjust the existing manufacturing device, which can save the costs.

In some embodiments, the marking portion 14 includes a marking layer 14B; the marking layer 14B and the active material layer 12 have different colors; the material removal region 13 is processed by a processing device; and the marking layer 14B is formed on a surface of the active material layer 12 by pasting or coating.

For example, the marking layer 14B can be formed by glue application or painting. The marking layer 14B can be white or in a color that has a great contrast with the color of the active material layer 12. The marking layer has a good optical characteristic, and its edge can be easily captured during detection.

In this embodiment, the marking portion 14 and the material removal region 13 are separately formed, without interference. Furthermore, the marking portion is set to be the marking layer 14B, which can prevent the influence of the marking portion 14 on the intensity of the first electrode plate 1 and avoid breakage during bending formation or use. Moreover, since the marking layer 14B is distinguished from the active material layer 12 in color, it is easy to capture the edge of the marking layer 14B through the optical characteristic, which can improve the convenience and precision of OH value detection.

In some embodiments, the manufacturing method further includes:

During the formation of the marking portion 14, the corresponding material removal regions 13 is used as a positioning reference; or

during the formation of the marking portion 14, the same positioning reference as that of the corresponding material removal region 13 is selected.

In this embodiment, during the formation of the marking portion 14, the material removal region 13 at the same bent position can be used as the positioning reference. For example, positioning is carried out by a center position of the material removal region 13, or by any first side edge 131 of the material removal region 13, so that the precision of a relative position between the marking portion 14 and the material removal region 13 can be improved, and accumulation of errors can be prevented. In this method, the material removal region 13 needs to be processed first, or the same positioning reference as that of the corresponding material removal region 13 can be selected. There is no limitation on the processing sequence of the marking portion 14 and the material removal region 13. For example, the marking portion and the material removal region can be both processed by using an initial end portion of the first electrode plate 1 as a positioning reference.

In some embodiments, the manufacturing method further includes:

The first electrode plate 1 is compounded with two spacers 3 to form a first composite electrode plate 10A;

a plurality of second electrode plates 2 are compounded with the two spacers 3 in the first composite electrode plate 10A respectively to form a second composite electrode plate 10B, wherein the second electrode plate 2 and the first electrode plate 1 have opposite polarities; and

the second composite electrode plate 10B is bent at the material removal regions 13 to form at least one bent portion S on the first electrode plate 1, wherein each bent portion S includes at least one bent section S2 and at least two straight sections S1, and two adjacent straight sections S1 are connected through the bent section S2; and the second electrode plate 2 is arranged between two adjacent straight sections S1.

The above steps can be executed after the first electrode plate 1 is completely processed. As shown in FIG. 16, the first electrode plate 1 and the two spacers 3 are compounded, and the first electrode plate 1 is located between the two spacers 3, forming the first composite electrode plate 10A. As shown in FIG. 17, the plurality of second electrode plates 2 are respectively compounded with the two spacers 3 in the first composite electrode plate 10A. Specifically, the plurality of second electrode plates 2 are alternately attached to the two spacers. 3. For each spacer 3, two adjacent second electrode plates 2 are spaced by one active material region 121. For example, the compounding can be performed in a hot pressing or cold pressing manner.

In this embodiment, considering that the OH value detection needs to be performed in the unfolded state of the composite electrode plate, the plurality of second electrode plates 2 are first attached to the first composite electrode plate 10A, and then the second composite electrode plate 10B is bent. The forming method of this stacked type electrode assembly 10 is conductive to performing the OH value detection.

In some embodiments, before the second composite electrode plate 10B is bent at the material removal regions 13, the method further includes:
A minimum distance, as a detected OH value, between an edge of each marking portion 14 in the extension direction L and an edge of the second electrode plate 2 adjacent to the marking portion is detected, and it is determined, in a case that the detected OH values of all the second electrode plates 2 are not less than a target OH value, that OH values of the electrode assembly 10 are qualified.

As shown in FIG. 7, the minimum distance between the edge of each marking portion 14 in the extension direction L and the edge of the second electrode plate 2 adjacent to the marking portion is used as the detected OH value, represented by OH2, OH2<OH1. Therefore, if the detected OH value is not less than the target OH value, an actual OH value is also not less than the target OH value. When the detected OH values of all the second electrode plates 2 are not less than the target OH value, it is determined that the OH values of the electrode assembly 10 are qualified.

In this embodiment, for a case where it is difficult to identify edges of the material removal regions 13, OH values can be detected with the help of the marking portions 14. Since the width of the marking portion 14 is not less than the width of the material removal region 13 and the marking portion spans across the material removal region 13, in a case that the detected OH values obtained through the marking portions 14 meet a requirement, actual OH values also meet the requirement. This can lower the difficulty of detecting the OH values in the electrode assembly 10 and help improve the precision of OH value detection.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1. An electrode assembly (10), comprising a first electrode plate (1), wherein the first electrode plate (1) comprises:

   a current collector (11); and
   active material layers (12), arranged at the current collector (11), wherein the active material layer (12) is provided with a plurality of material removal regions (13) at intervals in an extension direction (L) of the first electrode plate (1), and the material removal region (13) extends in a width direction (Y) of the first electrode plate (1); wherein a marking portion (14) is arranged on the active material layer (12), a width of the marking portion (14) in the extension direction (L) is greater than or equal to a width of the material removal region (13), and the marking portion spans across the material removal region (13).

2. The electrode assembly (10) according to claim 1, wherein the first electrode plate (1) is a negative electrode plate.

3. The electrode assembly (10) according to claim 1 or 2, wherein the active material layers (12) are respectively arranged on two sides of the current collector (11); and the active material layers (12) on the two sides are provided with the marking portions (14) at a position where each material removal region (13) is located.

4. The electrode assembly (10) according to any one of claims 1 to 3, wherein in the extension direction (L), the material removal region (13) has two first side edges (131) spaced apart; in the extension direction (L), the marking portion (14) has two second side edges (141) spaced apart; and at least a portion of the second side edges (141) is parallel to the first side edges (131).

5. The electrode assembly (10) according to claim 4, further comprising second electrode plates (2), wherein a maximum distance between one of the second side edges (141) of the marking portion (14) and the first side edge (131) on the same side is L1, a maximum distance between the other second side edge (141) and the first side edge (131) on the same side is L2, L1 and L2 are both less than a target overhang (OH) value, and the target OH value is a minimum distance between the second side edge (141) and an edge of the second electrode plate (2) adjacent to the second side edge.

6. The electrode assembly (10) according to claim 4, wherein
0.2* target OH value ≤L1≤0.95* target OH value, and
0.2* target OH value ≤L2≤0.95* target OH value.

7. The electrode assembly (10) according to claim 5 or 6, wherein L1≤1 mm, L2≤1 mm.

8. The electrode assembly (10) according to any one of claims 4 to 7, wherein a maximum distance between one of the second side edges (141) of the marking portion (14) and the first side edge (131) on the same side is L1, and a maximum distance between the other second side edge (141) and the first side edge (131) on the same side is L2; and a degree of deviation of the marking portion (14) from a center of the material removal region (13) in the extension direction (L) does not exceed 30%.

9. The electrode assembly (10) according to claim 8, wherein |L1-L2|≤0.2 mm.

10. The electrode assembly (10) according to any one of claims 1 to 9, wherein the active material layer (12) is provided with two marking portions (14) in the same material removal region (13), and the two marking portions (14) are respectively arranged in regions of the active material layer (12) close to two sides in the width direction (Y).

11. The electrode assembly (10) according to claim 10, wherein the marking portions (14) are located in a region that is 1/4 of the active material layer (12) from the width edge.

12. The electrode assembly (10) according to any one of claims 1 to 11, wherein the marking portions (14) have overlapping portions with the material removal region (13) in the width direction (Y), or the marking portions (14) are located on an extension line of the material removal region (13) in the width direction (Y).

13. The electrode assembly (10) according to any one of claims 1 to 12, wherein the marking portion (14) comprises a first through groove (14A).

14. The electrode assembly (10) according to claim 13, wherein in the width direction (Y), a total width of all the first through grooves (14A) on the active material layers (12) is A, a width of the material removal region (13) is B, and 2%≤A/B≤50%.

15. The electrode assembly (10) according to any one of claims 1 to 14, wherein the marking portion (14) comprises a marking layer (14B), and the marking layer (14B) and the active material layer (12) have different colors.

16. The electrode assembly (10) according to any one of claims 1 to 15, wherein the material removal region (13) comprises at least one of a continuous score (132), a discontinuous score (132), and a second through groove (133).

17. The electrode assembly (10) according to any one of claims 1 to 16, further comprising second electrode plates (2), wherein the first electrode plate (1) is bent to form at least one bent portion (S); each bent portion (S) comprises at least one bent section (S2) and at least two straight sections (S1), and two adjacent straight sections (S1) are connected through the bent section (S2);
for each bent portion (S), the second electrode plate (2) is arranged between two adjacent straight sections (S1); and the second electrode plate (2) and the first electrode plate (1) adjacent to the second electrode plate have opposite polarities.

18. The electrode assembly (10) according to claim 17, wherein in an opening direction (X) of each bent portion (S), the second electrode plate (2) is located between two adjacent marking portions (14); and the marking portions (14) are spaced apart from an edge of the second electrode plate (2).

19. A battery cell (100), comprising the electrode assembly (10) according to any one of claims 1 to 18.

20. A battery (200), comprising the battery cell (100) according to claim 19.

21. An electrical apparatus, comprising the battery cell (100) according to claim 19 and/or the battery (200) according to claim 20, configured to supply electric energy for the electrical apparatus.

22. A manufacturing method of an electrode assembly (10), comprising:

in a case that a first electrode plate (1) is in an unfolded state, arranging a plurality of material removal regions (13) at intervals on active material layers (12) of the first electrode plate (1) in an extension direction (L) of the first electrode plate, wherein the material removal regions (13) extend in a width direction (Y) of the first electrode plate (1), and the active material layers (12) are arranged on a current collector (11) of the first electrode plate (1); and
in a case that the first electrode plate (1) is in an unfolded state, arranging marking portions (14) on the active material layers (12), wherein a width of the marking portion (14) in the extension direction (L) is greater than or equal to a width of the material removal region (13), and the marking portion spans across the material removal region (13).

23. The manufacturing method according to claim 22, wherein the first electrode plate (1) forms a position to be bent in each material removal region (13); and after the material removal region (13) and the marking portion (14) at the same position to be bent are formed, the first electrode plate (1) moves to the next position to be bent.

24. The manufacturing method according to claim 23, wherein the material removal region (13) and the marking portion (14) are formed sequentially, alternately, or simultaneously at the same position to be bent.

25. The manufacturing method according to any one of claims 22 to 24, wherein the marking portion (14) comprises a first through groove (14A), and the material removal region (13) and the marking portion (14) are processed through the same processing device.

26. The manufacturing method according to any one of claims 22 to 24, wherein the marking portion (14) comprises a marking layer (14B); the marking layer (14B) and the active material layer (12) have different colors; the material removal region (13) is processed by a processing device; and the marking layer (14B) is formed on a surface of the active material layer (12) by pasting or coating.

27. The manufacturing method according to any one of claims 22 to 26, further comprising:

    during the formation of the marking portion (14), using the corresponding material removal region (13) as a positioning reference; or
    during the formation of the marking portion (14), selecting the same positioning reference as that of the corresponding material removal region (13).

28. The manufacturing method according to any one of claims 22 to 27, further comprising:

    compounding the first electrode plate (1) with two spacers (3) to form a first composite electrode plate (10A);
    compounding a plurality of second electrode plates (2) with the two spacers (3) in the first composite electrode plate (10A) respectively to form a second composite electrode plate (10B),

wherein the second electrode plate (2) and the first electrode plate (1) have opposite polarities; and
bending the second composite electrode plate (10B) at the material removal regions (13) to form at least one bent portion (S) on the first electrode plate (1), wherein each bent portion (S) comprises at least one bent section (S2) and at least two straight sections (S1), and two adjacent straight sections (S1) are connected through the bent section (S2); and the second electrode plate (2) is arranged between two adjacent straight sections (S1).

29. The manufacturing method according to claim 28, wherein before bending the second composite electrode plate (10B) at the material removal regions (13), the method further comprises:
detecting a minimum distance, as a detected OH value, between an edge of each marking portion (14) in the extension direction (L) and an edge of the second electrode plate (2) adjacent to the marking portion, and determining, in a case that the detected OH values of all the second electrode plates (2) are not less than a target OH value, that an OH value of the electrode assembly (10) is qualified.

300

303

301

302

304

200

**FIG. 1**

200

201B
201
201A

100

**FIG. 2**

103

100

103

102

101

**FIG. 3**

FIG. 4

FIG. 5

FIG. 6

**FIG. 7**

**FIG. 8**

**FIG. 9**

**FIG. 10**

**FIG. 11**

**FIG. 12**

**FIG. 13**

**FIG. 14A**

**FIG. 14B**

**FIG. 14C**

FIG. 14D

FIG. 15

10A

3 1

FIG. 16

10B

3 2 1

2 3

FIG. 17

S110 — In a case that a first electrode plate **1** is in an unfolded state, arrange a plurality of material removal regions **13** at intervals on active material layers **12** of the first electrode plate 1 in an extension direction **L**, wherein the material removal region **13** extends in a width direction **Y** of the first electrode plate **1**

S120 — In a case that the first electrode plate **1** is in a unfolded state, arrange marking portions **14** on the active material layers **12**, wherein a width of the marking portion **14** in the extension direction is greater than or equal to a width of the material removal region **13**, and the marking portion spans across the material removal region **13**

FIG. 18

## INTERNATIONAL SEARCH REPORT

| International application No. |
|---|
| **PCT/CN2022/143980** |

**A.    CLASSIFICATION OF SUBJECT MATTER**

H01M4/13(2010.01)i;  H01M10/0583(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 极片, 刻痕, 标记, 通孔, 通槽, battery, pole piece, score, mark, through hole, through slot

**C.    DOCUMENTS CONSIDERED TO BE RELEVANT**

| Category* | Citation of document, with indication, where appropriate, of the relevant passages | Relevant to claim No. |
|---|---|---|
| E | CN 115732628 A (NINGDE CONTEMPORARY AMPEREX TECHNOLOGY CO., LTD.) 03 March 2023 (2023-03-03) description, paragraphs 64-143, and figures 1-22 | 1-2, 4-5, 7-13, 16-22 |
| Y | WO 2021109363 A1 (NINGDE CONTEMPORARY AMPEREX TECHNOLOGY CO., LTD.) 10 June 2021 (2021-06-10) description, page 6, paragraph 2 to page 30, paragraph 1, and figures 1-31 | 1-29 |
| Y | CN 115498371 A (GUANGZHOU EHOLLY INTELLIGENT EQUIPMENT CO., LTD.) 20 December 2022 (2022-12-20) description, paragraphs 2-75, and figures 1-4 | 1-29 |
| Y | CN 213340434 U (NINGDE CONTEMPORARY AMPEREX TECHNOLOGY CO., LTD.) 01 June 2021 (2021-06-01) description, paragraphs 50-96, and figures 1-22 | 1-29 |
| Y | CN 115332604 A (GUANGZHOU EHOLLY INTELLIGENT EQUIPMENT CO., LTD.) 11 November 2022 (2022-11-11) description, paragraphs 3-74, and figures 1-6 | 1-29 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 September 2023** | **18 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 560 719 A1**

## INTERNATIONAL SEARCH REPORT

| | International application No. |
|---|---|
| | **PCT/CN2022/143980** |

### C. DOCUMENTS CONSIDERED TO BE RELEVANT

| Category* | Citation of document, with indication, where appropriate, of the relevant passages | Relevant to claim No. |
|---|---|---|
| Y | US 2012058387 A1 (SAMSUNG SDI CO., LTD.) 08 March 2012 (2012-03-08) description, paragraphs 7-53, and figures 1-4 | 1-14, 16-25, 27-28 |
| A | JP 2001266852 A (TOSHIBA BATTERY CO., LTD.) 28 September 2001 (2001-09-28) entire document | 1-29 |

Form PCT/ISA/210 (second sheet) (July 2022)

## INTERNATIONAL SEARCH REPORT
### Information on patent family members

International application No.

**PCT/CN2022/143980**

| Patent document cited in search report | | | Publication date (day/month/year) | Patent family member(s) | | | Publication date (day/month/year) |
|---|---|---|---|---|---|---|---|
| CN | 115732628 | A | 03 March 2023 | WO | 2023029795 | A1 | 09 March 2023 |
| WO | 2021109363 | A1 | 10 June 2021 | KR | 20220093183 | A | 05 July 2022 |
| | | | | EP | 3907807 | A1 | 10 November 2021 |
| | | | | US | 2022021016 | A1 | 20 January 2022 |
| | | | | JP | 2023504474 | A | 03 February 2023 |
| | | | | CN | 112310423 | A | 02 February 2021 |
| | | | | CN | 113302777 | A | 24 August 2021 |
| | | | | CN | 112310423 | B | 15 March 2022 |
| CN | 115498371 | A | 20 December 2022 | CN | 115498371 | B | 25 August 2023 |
| CN | 213340434 | U | 01 June 2021 | WO | 2022062221 | A1 | 31 March 2022 |
| | | | | CN | 114586216 | A | 03 June 2022 |
| | | | | EP | 4047708 | A1 | 24 August 2022 |
| | | | | US | 2022344718 | A1 | 27 October 2022 |
| | | | | JP | 2023511400 | A | 17 March 2023 |
| CN | 115332604 | A | 11 November 2022 | CN | 115332604 | B | 04 April 2023 |
| US | 2012058387 | A1 | 08 March 2012 | KR | 20120022385 | A | 12 March 2012 |
| | | | | KR | 101199125 | B1 | 09 November 2012 |
| | | | | US | 10014551 | B2 | 03 July 2018 |
| JP | 2001266852 | A | 28 September 2001 | | None | | |

Form PCT/ISA/210 (patent family annex) (July 2022)